# EUROPÄISCHE PATENTSCHRIFT

(11) **EP 2 911 373 B1**
(45) Veröffentlichungstag und Bekanntmachung des Hinweises auf die Patenterteilung: **19.10.2016**
(21) Anmeldenummer: 14156455.9
(22) Anmeldetag: 25.02.2014
(51) Int. Cl.: H04M 1/02, H04M 1/18

(54) **Bauteil zum Einbau in einer Wand**
Component for installation in a wall
Composant destiné à être intégré dans une paroi

(43) Veröffentlichungstag der Anmeldung: 26.08.2015
(73) Patentinhaber: Ruf Telematik AG, 8952 Schlieren (CH)
(72) Erfinder: Cieszynski, Felix, 8006 Zürich (CH); Brunner, Stefan, 5702 Niederlenz (CH); Verbeek, Kevin, 8236 Büttenhardt (CH); Hirt, Hubert, 78166 Donaueschingen (DE)
(74) Vertreter: Rutz, Andrea

(56) Entgegenhaltungen:
- DE-B3- 10 340 759

## Beschreibung

### TECHNISCHES GEBIET

Die vorliegende Erfindung betrifft ein Bauteil, insbesondere eine Sprechanlage, zum Einbau in einer Wand. Das Bauteil weist einen in der Wand befestigbaren Halterahmen sowie ein in den Halterahmen einsetzbares Einsatzmodul auf. Das Einsatzmodul umfasst ein Gehäuse, in welchem insbesondere Elektronikkomponenten untergebracht sein können, sowie eine Frontplatte, die zum Beispiel Bedienelemente und/oder Schlitze, Perforationen etc. für einen Lautsprecher und ein Mikrophon aufweisen kann.

### STAND DER TECHNIK

Beim Einbau von derartigen Bauteilen in einer Wand ist es wünschenswert, das Gehäuse des Einsatzmoduls, in welchem zum Beispiel Elektronikkomponenten untergebracht sind, möglichst vollständig in der Wand zu versenken, so dass es im vollständig eingebauten Zustand des Bauteils für einen Beobachter nicht sichtbar ist. Die Frontplatte, welche insbesondere eine Kommunikationsschnittstelle für einen Benutzer bilden kann, liegt dann üblicherweise auf der Wandoberfläche auf oder ist bündig zu dieser angeordnet. Bei dieser Einbauart, welche auch als Unterputz-Einbau bezeichnet wird, wird nicht nur ein ansprechendes optisches Aussehen erzielt, sondern die im Gehäuse untergebrachten Komponenten werden auch vor äusseren Einflüssen geschützt.

In der DE 103 40 762 ist eine Türstation für eine Türsprechanlage offenbart, bei welcher eine Abdeckplatte mittels Haken- und Rastelementen in einem Einsatzgehäuse befestigt wird. Das Einsatzgehäuse wiederum wird mittels Schraubbolzen in einem Unterputzgehäuse fixiert.

Die DE 10 2011 108 925 beschreibt ein Montagesystem, bei welchem ein Geräteeinsatz einerseits mittels Eingriff von Führungsarmen in Führungskulissen und andererseits mittels Federbolzen in einem Montagerahmen gesichert ist.

Die EP 1 920 599 offenbart die Montage eines Anzeigegeräts, welches in nach oben hin ragende Haken eines in einer Wand befestigten Aufnahmegehäuses einrastbar ist.

Bei all diesen Bauteilen des Standes der Technik ist nach dem Einbau jeweils ein einfaches Entfernen des Moduls mit den elektronischen Komponenten aus der Halterung möglich. Dies ist jedoch bei vielen Anwendungen unerwünscht. Insbesondere im öffentlichen Raum ist es oft sogar erforderlich, das Bauteil derart in einer Wand zu montieren, dass eine nicht autorisierte Demontage mit üblichen Werkzeugen verunmöglicht wird.

Eine Sprechstation mit einer Abdeckplatte, welche ausschliesslich mittels eines Spezialwerkzeugs von einem Aufnahmegehäuse lösbar ist, ist in der DE 20 2006 005 366 offenbart. Eine unautorisierte Demontage der Sprechstation wird hier also verhindert. Das Aufnahmegehäuse der in der DE 20 2006 005 366 gezeigten Sprechstation sowie die an der Abdeckplatte zur Verbindung mit dem Aufnahmegehäuse erforderlichen Riegelteile weisen jedoch jeweils eine verhältnismässig aufwändige und entsprechend kostspielige Konstruktion mit einer Vielzahl von separaten Bauteilen auf.

Die DE 103 40 759 offenbart eine Türsprechanlage, bei welcher eine Rahmenplatte mit daran angebrachten Elektronikmodulen in ein in einer Wand befestigtes Einbaugehäuse einsetzbar ist. Zur Befestigung der Rahmenplatte im Einbaugehäuse ist an der Rahmenplatte ein oberer Einhängehaken sowie ein unterer federbelasteter Rasthaken vorgesehen, welche zum Eingreifen in eine entsprechend vorgesehe Hakenaufnahme bzw. Rastaufnahme des Einbaugehäuses dienen.

### DARSTELLUNG DER ERFINDUNG

Es ist also Aufgabe der vorliegenden Erfindung, ein einfach herstellbares Bauteil anzugeben, welches einerseits auf eine einfache Art und Weise in einer Wand befestigbar ist, andererseits jedoch vor einer unautorisierten Demontage effektiv geschützt ist. Zur Lösung dieser Aufgabe wird ein Bauteil vorgeschlagen, wie es in Anspruch 1 angegeben ist.

Die vorliegende Erfindung stellt also ein Bauteil zum Einbau in einer Wand zur Verfügung, aufweisend
ein Einsatzmodul mit einem Gehäuse, einer am Gehäuse angebrachten Frontplatte und einer ersten Hintergreifstruktur; sowie
einen in der Wand befestigbaren Halterahmen, welcher einen Innenraum zur Aufnahme des Gehäuses des Einsatzmoduls begrenzt, und welcher ein in den Innenraum hineinragendes erstes Rückhalteelement aufweist.

Die erste Hintergreifstruktur und das erste Rückhalteelement sind dabei derart ausgebildet und angeordnet, dass das erste Rückhalteelement zum Halten der ersten Hintergreifstruktur dient, um dadurch in einem eingebauten Zustand des Bauteils eine Bewegung des Einsatzmoduls relativ zum Halterahmen in eine im Wesentlichen senkrecht zur Wandoberfläche stehende Richtung zu verhindern.

Das Bauteil weist zudem zumindest ein Schnappelement auf, welches am Einsatzmodul oder am Halteralmen ausgebildet ist, und welches zum Einschnappen an einer dazu korrespondierenden Einschnappstruktur des Halterahmens bzw. des Einsatzmoduls ausgebildet ist, um dadurch im eingebauten Zustand des Bauteils eine Bewegung des Einsatzmoduls relativ zum Halterahmen in eine sich im Wesentlichen parallel zur Wandoberfläche erstreckende Richtung zu verhindern.

Die erste Hintergreifstruktur und das erste Rückhalteelement sowie das zumindest eine Schnappelement und die Einschnappstruktur verhindern im eingebauten Zustand des Bauteils somit Bewegungen des Einsatzmoduls relativ zum Halterahmen in zwei im Wesentlichen senkrecht aufeinander stehenden Richtungen. Gemeinsam verhindern die erste Hintergreifstruktur, das erste Rückhalteelement, das Schnappelement und die Einschnappstruktur dadurch ein Entfernen des Einsatzmoduls aus dem Halterahmen.

Üblicherweise wird bei der Montage des angegebenen Bauteils in einem ersten Schritt der Halterahmen in der Wand befestigt. In einem zweiten Schritt wird dann das Einsatzmodul in einer senkrecht zur Wandoberfläche stehenden Richtung in den Halterahmen eingesetzt und anschliessend entlang einer sich parallel zur Wandoberfläche erstreckenden Richtung, hier Einschnapprichtung genannt, gegenüber dem Halterahmen verschoben, sodass das Schnappelement in der Einschnappstruktur einschnappt. In dem somit erreichten eingebauten Zustand des Bauteils ist aufgrund des Eingriffs des Schnappelements in der Einschnappstruktur eine Verschiebung des Einsatzmoduls entgegen der Einschnapprichtung relativ zum Halterahmen verhindert.

Mit dem Ausdruck "eine Bewegung verhindern" ist gemeint, dass ein zerstörungsfreies Entfernen des Einsatzmoduls vom Halterahmen mit herkömmlichen Mitteln, also ausschliesslich von Hand oder mit herkömmlichen Werkzeugen, nicht möglich ist. Das Einsatzmodul ist somit im eingebauten Zustand bzw. Endmontagezustand nur mittels eines eigens dafür vorgesehenen Spezialwerkzeugs vom Halterahmen entfernbar.

Beim Bauteil kann es sich um eine Sprechanlage, insbesondere um eine Gegensprechanlage handeln. Im Falle einer Sprechanlage sind die zur Kommunikation benötigten Komponenten wie Lautsprecher, Mikrophon, Sende- und Empfangseinheiten etc. üblicherweise im Gehäuse des Einsatzmoduls untergebracht. An der Frontplatte sind dann in der Regel Perforationen, Schlitze und/oder Durchbrüche unmittelbar angrenzend zu den dahinter im Gehäuse angeordneten Lautsprechern, Mikrophonen etc. vorgesehen. Zudem können Bedienelemente, wie beispielsweise ein Druckknopf, im Bereich der Frontplatte vorhanden sein, mit denen ein Benutzer eine Gesprächsverbindung aufbauen kann. Die Sprechanlage kann insbesondere auch eine Notsprechanlage sein, um ein Notfallsignal abzusenden bzw. Hilfe anzufordern.

Die Befestigung des Halterahmens in der Wand sind am Halterahmen vorteilhaft eigens dafür vorgesehene Befestigungselemente vorhanden, mit denen der Halterahmen insbesondere mittels Nägeln, Schrauben und/oder Schraubenmuttern in der Wand fixierbar ist. Vorteilhaft ist der Halterahmen derart in der Wand befestigbar, dass er weitgehend in dieser versenkt ist, wobei der Einbau des Bauteils in der Wand in diesem Fall auch als Unterputz-Montage bezeichnet wird. Insbesondere vorteilhaft ist der Halterahmen dabei derart in der Wand befestigbar, dass sich der gesamte Innenraum des Halterahmens unterhalb der Wandoberfläche befindet. Das Einsatzmodul ist dann üblicherweise derart in den Halterrahmen einsetzbar, dass die Frontplatte mit ihrer Rückseite auf der Wandoberfläche aufliegt oder zumindest in unmittelbarer Nähe zu dieser angeordnet ist. Vorteilhaft überdeckt dabei die Frontplatte sämtliche Bereiche des Halterahmens, sodass weder der Halterahmen noch das Gehäuse des Einsatzmoduls sichtbar sind. Aufgrund der Frontplatte ist zudem vorteilhaft im eingebauten Zustand des Bauteils jeglicher Zugang mit herkömmlichen Werkzeugen zum Halterahmen und insbesondere den Befestigungselementen verunmöglicht, wodurch eine unautorisierte Demontage des Halterahmens von der Wand verhindert wird. Die Oberfläche der Frontplatte erstreckt sich somit im eingebauten Zustand des Bauteils üblicherweise parallel zur Wandoberfläche.

Bevorzugt ist das Schnappelement am Einsatzmodul und die Einschnappstruktur am Halterahmen ausgebildet. Der Halterahmen ist dadurch konstruktiv einfacher herstellbar. Es können ein oder mehrere Schnappelemente und entsprechend eine oder mehrere Einschnappstrukturen vorhanden sein. Bevorzugt weist das Bauteil aber genau zwei Schnappelemente und entsprechend genau zwei Einschnappstrukturen auf.

In der Regel ist das Schnappelement elastisch und vorteilhaft als ein hakenförmiger Federarm ausgebildet. Mittels eines hakenförmigen Federarms kann auf eine einfache Art und Weise eine Befestigung des Einsatzmoduls am Halterahmen erzielt werden, welche nur mittels eines Spezialwerkzeugs wieder gelöst werden kann. Dabei kann mit Hilfe des Spezialwerkzeugs der Federarm derart bewegt werden, dass die Schnappverbindung gelöst wird. In der Regel erstreckt sich der Federarm in die Einschnapprichtung und somit insbesondere in eine im Wesentlichen parallel zur Wandoberfläche stehende Richtung.

Bei der Einschnappstruktur kann es sich insbesondere um eine einfache Unterkante des Halterahmens bzw. des Einsatzmoduls handeln.

Vorzugsweise ist das Schnappelement bzw. die Einschnappstruktur, je nachdem ob am Halterahmen das Schnappelement oder die Einschnappstruktur ausgebildet ist, ausserhalb vom Innenraum des Halterahmens angeordnet. Insbesondere bevorzugt ist das Schnappelement bzw. die Einschnappstruktur sogar in einem Bereich des Halterahmens angeordnet, welcher im eingebauten Zustand des Bauteils auf der Wandoberfläche aufliegt. Auf diese Weise ist im eingebauten Zustand des Bauteils mit Hilfe eines Spezialwerkzeugs ein Zugang zum Schnappelement möglich, um die Schnappverbindung zu lösen und dadurch das Einsatzmodul vom Halterahmen zu demontieren. Vorteilhaft ist im eingebauten Zustand des Bauteils das am Halterahmen vorgesehene Schnappelement bzw. die am Halterahmen vorgesehene Einschnappstruktur zwischen der Wandoberfläche und der Frontplatte des Einsatzmoduls angeordnet.

Eine einfache Konstruktionsart des Halterahmens kann insbesondere dann erreicht werden, wenn es sich beim ersten Rückhalteelement um eine Lasche handelt. Vorteilhaft sind zumindest zwei Laschen vorgesehen, welche auf einander gegenüberliegenden Seiten des Halterahmens und insbesondere auf derselben Höhe angeordnet sind.

Besonders einfach und kostengünstig ist die Herstellung des Halterahmens, wenn dieser aus einem oder mehreren Blechen, wie beispielsweise Aluminiumblechen, hergestellt ist. Der Halterahmen ist dadurch im Wesentlichen ausschliesslich mittels Stanzen, Schneiden und Umbiegen des Blechs herstellbar. Vorteilhaft ist der Halterahmen aus mehr als einem Blech hergestellt, und die Schweissnähte sind derart angeordnet, dass allfällige durch die Schweissnähte bedingte Herstellungstoleranzen kompensiert werden.

Vorteilhaft ist am Gehäuse des Einsatzmoduls zumindest eine erste Führungsstruktur vorhanden, welche beim Einsetzen des Einsatzmoduls in den Halterahmen eine erste Führungsbahn für das Einsatzmodul entlang des ersten Rückhalteelements bildet. Das Vorhandensein einer Führungsstruktur am Gehäuse des Einsatzmoduls erleichtert das Einsetzen des Einsatzmoduls in den Halterahmen und vereinfacht entsprechend die Montage des Bauteils in der Wand. Es werden dadurch zudem Fehlmanipulationen verhindert.

Vorteilhaft ist zudem am Gehäuse des Einsatzmoduls eine zweite Führungsstruktur vorhanden, welche beim Einsetzen des Einsatzmoduls in den Halterahmen eine zweite Führungsbahn für das Einsatzmodul entlang des ersten Rückhalteelements bildet, so dass das erste Rückhalteelement beim Einsetzen des Einsatzmoduls in den Halterahmen zwischen der ersten und der zweiten Führungsbahn geführt ist. Die Bewegung des Einsatzmoduls relativ zum Halterahmen ist dadurch bei der Montage des Bauteils im Wesentlichen vorgegeben. Falls mehr als ein Rückhalteelement am Halterahmen vorgesehen sind, ist bevorzugt eine erste Führungsstruktur und insbesondere bevorzugt auch eine zweite Führungsstruktur für jedes dieser ersten Rückhaltelemente am Gehäuse vorgesehen.

In einer besonders bevorzugten Ausführungsform bilden die erste Hintergreifstruktur und die zweite Führungsstruktur des Einsatzmoduls gemeinsam eine L-förmige Struktur. Bevorzugt ist auch die zweite Führungsstruktur L-förmig ausgebildet. Die erste Führungsstruktur und, falls vorhanden, die zweite Führungsstruktur bilden somit insbesondere eine Führungskulisse zur Führung des ersten Rückhalteelements bei der Montage des Einsatzmoduls in den Halterahmen. Eine L-förmige Struktur kann nicht nur eine Führungsstruktur darstellen, sondern zusätzlich auch einen Anschlag für das erste Rückhalteelement.

Vorteilhaft nähern sich die erste und die zweite Führungsstruktur in Richtung zur Frontplatte einander an. Das Einsetzen des Einsatzmoduls in den Halterahmen ist dadurch für den Benutzer erleichtert.

In einer bevorzugten Ausführungsform weist der Halterahmen eine den Innenraum begrenzende Scitenwand sowie einen Befestigungsabschnitt auf, welcher sich im Wesentlichen senkrecht derart von der Seitenwand aus erstreckt, dass er sich im eingebauten Zustand des Bauteils im Wesentlichen parallel zur Wandoberfläche erstreckt. Das Schnappelement bzw. die Einschnappstruktur ist in diesem Fall bevorzugt an diesem Befestigungsabschnitt ausgebildet. Eine derartige Ausbildung des Halterahmens ermöglicht eine konstruktiv besonders einfache Herstellung des Bauteils, wobei dadurch auch verhältnismässig einfach ein Spezialwerkzeug zum Lösen der Schnappverbindung hergestellt werden kann. Bevorzugt ist am Befestigungsabschnitt zumindest ein Befestigungselement vorgesehen, welches zum Befestigen des Halterahmens in der Wand dient. Beim Befestigungselement kann es sich insbesondere um eine Schraubhülse mit einem Innen- oder Aussengewinde handeln.

Vorteilhaft weist das Einsatzmodul eine zweite Hintergreifstruktur und der Halterahmen ein zweites Rückhalteelement auf. Die zweite Hintergreifstruktur und das zweite Rückhalteelement sind dabei derart ausgebildet und angeordnet, dass das zweite Rückhalteelement zum Halten der zweiten Hintergreifstruktur dient, um dadurch im eingebauten Zustand des Bauteils eine Bewegung des Einsatzmoduls relativ zum Halterahmen in eine in Wesentlichen senkrecht zur Wandoberfläche stehende Richtung zu verhindern. Dadurch wird eine zusätzliche Sicherung des Einsatzmoduls im Halterahmen erreicht.

Vorteilhaft weist das Gehäuse des Einsatzmoduls eine Aussenfläche auf, welche eine derart abgerundete Form hat, dass das Einsatzmodul aufgrund dieser abgerundeten Form in einer schrägen Lage in den Halterahmen eingesetzt und mit einer anschliessenden Kippbewegung in den Halterahmen eingeführt werden kann. Die Montage des Einsatzmoduls im Halterahmen ist dadurch wesentlich vereinfacht, da Kabel, welche beim Einsetzen des Einsatzmoduls in der Regel an dessen Rückseite angeschlossen sind, dabei kontrolliert nach hinten gedrückt werden und nicht z.B. zwischen Einsatzmodul und Halterahmen eingeklemmt werden.

Vorteilhaft weist das Gehäuse des Einsatzmoduls eine Aussenfläche mit einer uneben ausgebildeten Oberflächenstruktur auf und der Halterahmen eine zum Innenraum hin gerichtete Innenseite mit einer komplementär zu dieser Oberflächenstruktur strukturierten Führungsstruktur, so dass beim Einsetzen des Einsatzmoduls in den Halterahmen die Oberflächenstruktur von der Führungsstruktur geführt wird. Falls das Gehäuse zudem eine Aussenfläche mit einer abgerundeten Form aufweist, ist die uneben ausgebildete Oberflächenstruktur bevorzugt an derselben Aussenfläche ausgebildet.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine perspektivische Ansicht von schräg vorne eines Einsatzmoduls und eines Halterahmens einer erfindungsgemässen Sprechanlage vor deren Montage in einer Wand;
- Fig. 1b: eine perspektivische Ansicht von schräg hinten des Einsatzmoduls und des Halterahmens der in der Fig. 1 gezeigten Sprechanlage;
- Fig. 2a: eine perspektivische Ansicht von schräg vorne des Halterahmens der in der Fig. 1 gezeigten Sprechanlage;
- Fig. 2b: eine Vorderansicht des Halterahmens der in der Fig. 1 gezeigten Sprechanlage;
- Fig. 2c: eine zentrale Schnittansicht in der Ebene II-II des in der Fig. 2b gezeigten Halterahmens;
- Fig. 3: eine Seitenansicht des Einsatzmoduls und des Halterahmens der in der Fig. 1 gezeigten Sprechanlage bei deren Montage in einer Wand, in der Ausgangsposition unmittelbar vor Einführen des Einsatzmoduls in den Halterahmen;
- Fig. 4: eine Seitenansicht des Einsatzmoduls und des Halterahmens der in der Fig. 1 gezeigten Sprechanlage bei deren Montage in einer Wand, beim Einführen des Einsatzmoduls in den Halterahmen;
- Fig. 5a: eine Seitenansicht des Einsatzmoduls und des Halterahmens der in der Fig. 1 gezeigten Sprechanlage bei deren Montage in einer Wand, nach Einführen des Einsatzmoduls in den Halterahmen;
- Fig. 5b: eine teilweise ausgeschnittene Seitenansicht des Halterahmens sowie eine Seitenansicht des Einsatzmoduls mit Ausschnitten bis zu der in der Fig. 7a gezeigten Ebene V-V, in der in Fig. 5a gezeigten Montagesituation;
- Fig. 5c: eine vergrösserte Detailansicht des in der Fig. 5b strichpunktiert gekennzeichneten Bereiches;
- Fig. 5d: eine vergrösserte Detailansicht des in der Fig. 5b gestrichelt gekennzeichneten Bereiches;
- Fig. 6a: eine Seitenansicht des Einsatzmoduls und des Halterahmens der in der Fig. 1 gezeigten Sprechanlage bei deren Montage in einer Wand, in der Endposition nach erfolgter Vertikalverschiebung des Einsatzmoduls relativ zum Halterahmen;
- Fig. 6b: eine teilweise ausgeschnittene Seitenansicht des Halterahmens sowie eine Seitenansicht des Einsatzmoduls mit Ausschnitten bis zu der in der Fig. 7a gezeigten Ebene V-V, in der in Fig. 6a gezeigten Montagesituation;
- Fig. 6c: eine teilweise ausgeschnittene Seitenansicht des Halterahmens sowie eine Seitenansicht des Einsatzmoduls mit einem Ausschnitt bis zu der in der Fig. 7a gezeigten Ebene VI-VI, in der in Fig. 6a gezeigten Montagesituation;
- Fig. 6d: eine vergrösserte Detailansicht des in der Fig. 6b gestrichelt gekennzeichneten Bereiches;
- Fig. 6e: eine vergrösserte Detailansicht des in der Fig. 6b strichpunktiert gekennzeichneten Bereiches;
- Fig. 6f: eine vergrösserte Detailansicht des in der Fig. 6c gestrichelt gekennzeichneten Bereiches;
- Fig. 7a: eine Rückansicht des Einsatzmoduls und des Halterahmens der in der Fig. 1 gezeigten Sprechanlage, nach erfolgter Montage;
- Fig. 7b: eine Schnittansicht in der in der Fig. 7a dargestellten Ebene VII-VII des Einsatzmoduls und des Halterahmens der in der Fig. 1 gezeigten Sprechanlage, nach erfolgter Montage; sowie
- Fig. 7c: eine Vorderansicht der in der Fig. 1 gezeigten Sprechanlage, nach erfolgter Montage.

### BESCHREIBUNG BEVORZUGTER AUSFÜHRUNGSFORMEN

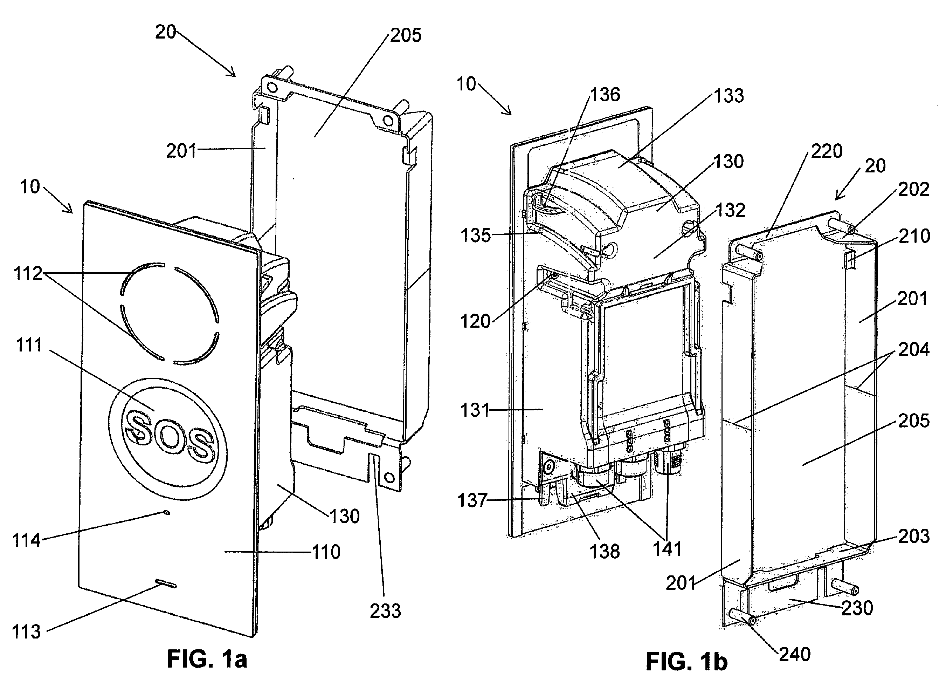

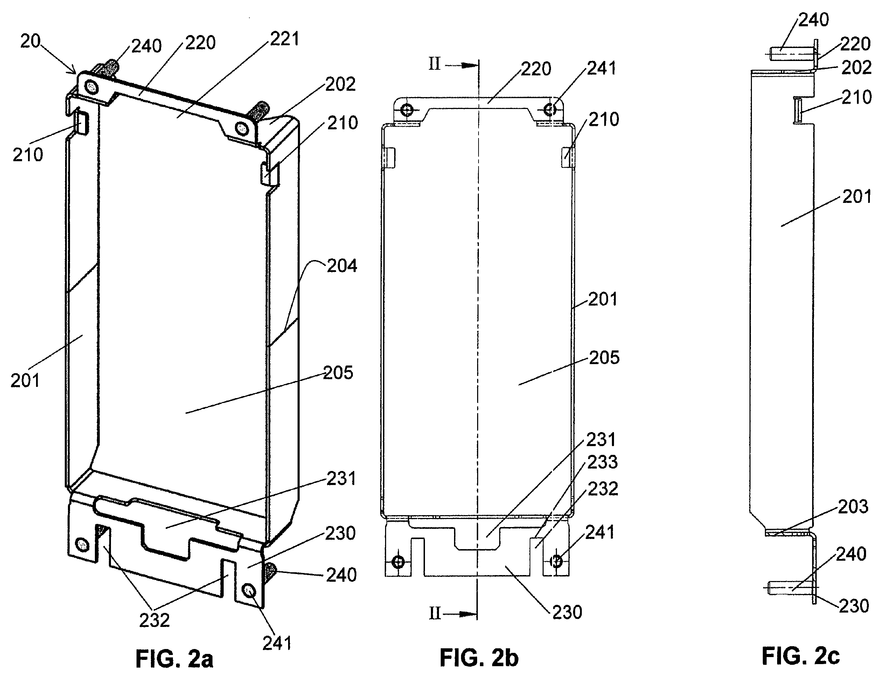

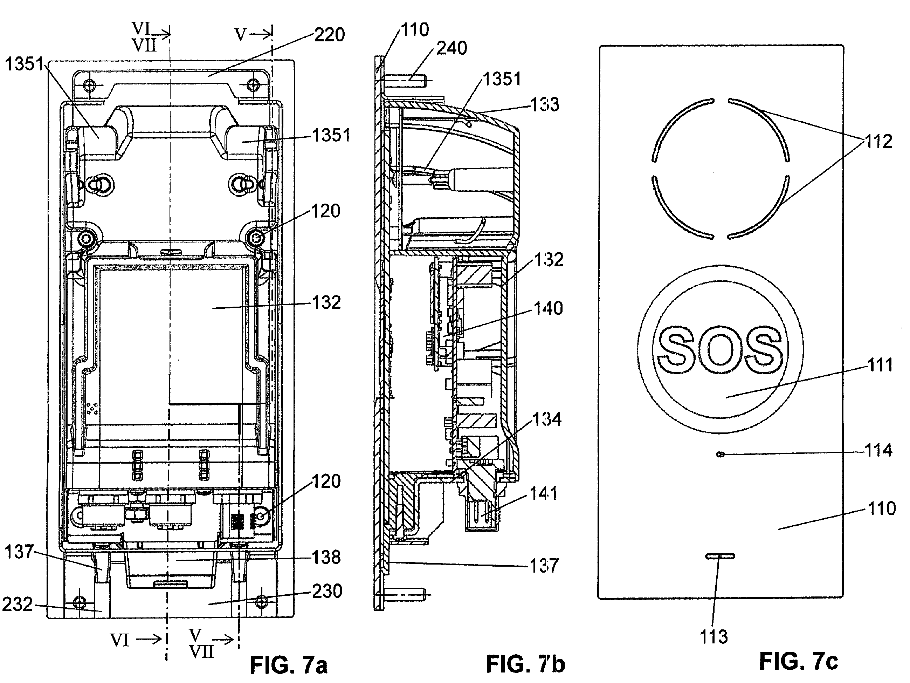

In den Figuren 1a bis 7c ist ein erfindungsgemässes Bauteil in Form einer Gegensprechanlage dargestellt, welche zum Einbau in einer Wand ausgebildet ist. Die Gegensprechanlage weist einen Halterahmen 20 auf, der in einer entsprechend ausgebildeten Versenkung einer Wand befestigbar ist, sowie ein Einsatzmodul 10, welches derart in den Halterahmen 20 einsetzbar ist, dass eine Entfernung des Einsatzmoduls 10 aus dem Halterahmen 20 ausschliesslich mittels eines Spezialwerkzeugs möglich ist.

Die Ausgestaltung des Halterahmens 20 ist insbesondere aus den Figuren 1a bis 2c ersichtlich. Der Halterahmen 20 hat eine im Wesentlichen rechteckige Form mit zwei vertikalen Seitenwänden 201, einer oberen horizontalen Seitenwand 202 und einer unteren horizontalen Seitenwand 203. Die Seitenwände 201, 202 und 203 begrenzen gemeinsam einen Innenraum 205 des Halterahmens 20, welcher zur Aufnahme eines Gehäuses 130 des Einsatzmoduls 10 dient. Die Seitenwände 201, 202 und 203 sind jeweils flach, insbesondere bandförmig ausgebildet und sind mit ihren Innenflächen jeweils zum Innenraum 205 hin gewandt.

In einem oberen Bereich des Halterahmens 20 ist an den vertikalen Seitenwänden 201 jeweils eine in den Innenraum 205 hineinragende Lasche 210 angebracht. Die Laschen 210 sind beabstandet, aber in der Nähe der oberen horizontalen Seitenwand 202 auf derselben Höhe einander gegenüberliegend angeordnet. Die Laschen 210 erstrecken sich dabei jeweils senkrecht von den vertikalen Seitenwände 201 in den Innenraum 205.

Die obere horizontale Seitenwand 202, welche nicht durchgehend ausgebildet ist, sondern eine Unterbrechung aufweist, ist entlang ihrer Vorderkante mit einem oberen Befestigungsabschnitt 220 verbunden. Dieser obere Befestigungsabschnitt 220 schliesst die aufgrund der Unterbrechung in der oberen horizontalen Seitenwand 202 an sich offene rechteckige Form des Halterahmens 20. Der obere Befestigungsabschnitt 220 erstreckt sich in senkrechter Richtung von der oberen horizontalen Seitenwand 202 derart nach oben hin, dass er im eingebauten Zustand des Bauteils auf der Wandoberfläche aufliegt. Im Bereich der durch die obere horizontale Seitenwand 202 gebildeten Unterbrechung weist der obere Befestigungsabschnitt 220 entlang seiner beinahe gesamten Unterkante eine nach unten hin offene Aussparung 221 auf. Gemeinsam mit der Seitenwand 202 bildet die Unterkante des Befestigungsabschnitts 220 eine Führungsstruktur des Halterahmens 20, welche das Einsetzen des Einsatzmoduls 10 erleichtert.

Auf der Rückseite des im Wesentlichen rechteckigen oberen Befestigungsabschnitts 220 sind jeweils in den oberen Eckbereichen in der Nähe der vertikalen Seitenwände 201 Schraubhülsen 240 angebracht. Via ein Schraubloch 241 ist jeweils von der Vorderseite der Frontplatte 110 her eine Schraube durch die Schraubhülsen 240 durchführbar, um den Halterahmen 20 in einer Wand zu verankern.

An der Vorderseite der die beiden vertikalen Seitenwände 201 verbindenden unteren horizontalen Seitenwand 202 ist ein unterer Befestigungsabschnitt 230 angebracht. Dieser untere Befestigungsabschnitt 230 erstreckt sich im Wesentlichen senkrecht von der unteren horizontalen Seitenwand 203 nach unten hin, so dass er im eingebauten Zustand des Bauteils auf der Wandoberfläche aufliegt. Im Übergangsbereich zwischen der unteren horizontalen Seitenwand 203 und dem unteren Befestigungsabschnitt 230 ist eine Öffnung 231 ausgebildet. Die Öffnung 231 ist in der Vorderansicht des Halterahmens 20 im Wesentlichen T-förmig ausgestaltet. Dadurch, dass die Öffnung 231 teilweise im Bereich der unteren horizontalen Seitenwand 203 und teilweise im Bereich des unteren Befestigungsabschnitts 230 angeordnet ist, ist sie sowohl senkrecht von oben her als auch senkrecht von vorne her zugänglich. Auf der Rückseite des im Wesentlichen rechteckig ausgebildeten unteren Befestigungsabschnitts 230 ist in den unteren Eckbereichen jeweils eine sich senkrecht nach hinten erstreckende Schraubhülse 240 angebracht. Die Schraubhülsen 240 münden jeweils nach vorne hin in ein am Befestigungsabschnitt 230 ausgebildeten Schraubloch 241.

In der Nähe der Schraublöcher 241 sind am unteren Befestigungsabschnitt 230 zwei jeweils nach unten hin offene, rechteckige Aussparungen 232 ausgebildet. Die Aussparungen 232 werden nach oben hin jeweils von einer Unterkante 233 des unteren Befestigungsabschnitts 230 begrenzt. Die Unterkanten 233 bilden jeweils eine Einschnappstruktur.

Der Halterahmen 20 ist auf eine sehr einfache Art und Weise aus einem einfachen Metallblech, wie insbesondere einem Aluminiumblech, herstellbar. Mit Ausnahme der Schraubhülse 240 kann der gesamte Halterahmen 20 aus einem Metallblech mittels Stanzen und anschliessendem Umbiegen hergestellt werden. Der obere und der untere Befestigungsabschnitt 220 und 230 können aufgrund der Aussparung 221 bzw. der Öffnung 231 mittels geringem Krafteinsatz jeweils derart gegenüber der Seitenwand 202 bzw. 203 umgebogen werden, dass sie senkrecht zur oberen horizontalen Seitenwand 202 bzw. zur unteren horizontalen Seitenwand 203 stehen. Die Laschen 210 werden jeweils durch zwei kurze parallele Einschnitte in dem im eingebauten Zustand nach vorne hin gewandten Bereich der vertikalen Seitenwände 201 und anschliessendem Umbiegen des sich zwischen den beiden Einschnitten befindlichen Teils hergestellt. Die Schraubhülsen 240 können einfach an der Rückseite des oberen bzw. des unteren Befestigungsabschnitts 220 bzw. 230 angeschweisst werden. Der Halterrahmen 20 kann optional aus einem oder mehreren Metallblechen hergestellt sein, welche nach dem Umbiegen entlang von Schweissnähten 204 zusammengeschweisst werden können. Im vorliegenden Fall wurde der Halterahmen 20 derart aus genau zwei Metallblechen hergestellt, dass jeweils eine Schweissnaht 204 an jeder der vertikalen Seitenwände 201 des Halterahmens 20 angeordnet ist. Herstellungstoleranzen, welche durch die Schweissnähte 204 bedingt sind, werden somit kompensiert, da nicht nur einseitig eine Schweissnaht vorhanden ist.

Das Einsatzmodul 10 ist insbesondere aus den Figuren 1a, 1b, 3 sowie 7a bis 7c ersichtlich. Das Einsatzmodul 10 weist eine Frontplatte 110 sowie ein rückseitig daran angebrachtes Gehäuse 130 auf. Die Vorderseite der eben ausgebildeten Frontplatte 110 bildet eine Kommunikationsschnittstelle für einen Benutzer, um insbesondere bei einem Notfall mit einem entfernten Gesprächspartner, wie zum Beispiel einer Einsatzzentrale der Polizei, der Ambulanz etc. Kontakt aufnehmen zu können. An der Frontplatte 110 ist hierzu insbesondere ein SOS-Druckknopf 111 vorgesehen. Des Weiteren sind in der Frontplatte 110 Lautsprecherperforationen 112, ein Mikrophonschlitz 113 sowie eine Statusleuchte 114 vorgesehen. Im eingebauten Zustand liegt die Frontplatte 110 im Umfangsbereich mit Ihrer Rückseite auf einer Wandoberfläche auf oder ist umlaufend unmittelbar benachbart zu dieser angeordnet.

Das Gehäuse 130 ist mittels Schrauben 120 rückseitig an der Frontplatte 110 angebracht. Das Gehäuse 130 weist Seitenwände 131, eine Rückwand 132, eine Deckwand 133 sowie eine Bodenwand 134 auf, welche gemeinsam einen Innenraum des Gehäuses 130 begrenzen. In diesem Innenraum des Gehäuses 130, welcher nach vorne hin von der Frontplatte 110 begrenzt ist, sind Elektronikkomponenten 140 untergebraucht. Bei den Elektronikkomponenten 140 kann es sich insbesondere um Lautsprecher, Mikrophone, Leuchtdioden, Schalter, Sende- und Empfangseinheiten handeln, welche für die Funktion einer Spechanlage üblicherweise benötigt werden. Im Bereich der Bodenwand 134 des Gehäuses 130 sind Anschlussstecker 141 vorgesehen, welche zum Anschliessen von Signal- und Datenkabeln sowie zur Energieversorgung der im Gehäuse 130 untergebrachten Elektronikkomponenten 140 dienen.

In einem oberen Bereich der Seitenwände 131 weist das Gehäuse 130 zwei auf jeweils gleicher Höhe angeordnete seitliche Führungsstrukturen 135 auf. Die Führungsstrukturen 135 weisen jeweils einen gewölbten Abschnitt 1351 auf, welcher eine von ganz hinten des Gehäuses 130 nach beinahe ganz vorne hin leicht ansteigende Führungsbahn mit einer nach oben hin weisenden Oberfläche bildet. Die Führungsbahn ist dabei derart gebogen, dass sie im hinteren Bereich des Gehäuses 130 zuerst steil ansteigt, um dann zum vorderen Bereich des Gehäuses 130 hin zu einer beinahe horizontalen Erstreckung abzuflachen. Vom vorderen Ende des gewölbten Abschnitts 1351 aus erstreckt sich jeweils ein vertikaler Abschnitt 1352 der Führungsstruktur 135 im Wesentlichen senkrecht nach oben hin. Während die gewölbten Abschnitte 1351 der Führungsstrukturen 135 jeweils einen unteren Anschlag für eine der beiden Laschen 210 des Halterahmens 20 bilden, stellen die vertikalen Abschnitte 1352 in der Nähe der Frontplatte 110 jeweils einen entsprechenden vorderen Anschlag dar.

Oberhalb der gewölbten Abschnitte 1351 der seitlich angeordneten Führungsstrukturen 135 sind an den Seitenwänden 131 des Gehäuses 130 jeweils seitliche L-förmige Strukturen 136 vorgesehen. Diese L-förmigen Strukturen 136 sind jeweils auf derselben Höhe in einem vorderen Bereich des Gehäuses 130 angeordnet. Die L-förmigen Strukturen 136 weisen jeweils einen kurzen vertikalen Abschnitt 1361 auf, welcher nach oben hin auf derselben Höhe endet wie der vertikale Abschnitt 1352 der Führungsstruktur 135. Der Abstand zwischen dem vertikalen Abschnitt 1352 der Führungsstrukturen 135 und dem vertikalen Abschnitt 1361 der L-förmigen Strukturen 136 ist jeweils geringfügig grösser als die Dicke der Lasche 210. Die L-förmige Struktur 136 weist zudem einen sich vom unteren Ende des vertikalen Abschnitts 1361 im Wesentlichen senkrecht nach hinten erstreckenden horizontalen Abschnitt 1362 auf. Der Abstand des horizontalen Abschnitts 1362 und des gewölbten Abschnitts 1351 der Führungsstruktur 135 ist im vorderen Bereich der L-förmigen Struktur 136 geringfügig grösser als die Höhe der Lasche 210. Nach hinten hin erstreckt sich der horizontale Abschnitt 1362 der L-förmigen Struktur 136 bis ungefähr die Hälfe der Seitenwand 131 und ist dabei leicht nach oben hin gebogen. Von hinten nach vorne hin nähern sich der gewölbte Abschnitt 1351 der Führungsstruktur 135 und der horizontale Abschnitt 1362 der L-förmigen Struktur 136 somit einander an.

Die Deckwand 133 des Gehäuses 130 weist eine von vorne nach hinten abgerundete Form auf und verläuft dabei im Wesentlichen parallel zu den gewölbten Abschnitten 1351 der seitlichen Führungsstrukturen 135. In der Mitte weist die Deckfläche 133 eine von vorne nach hinten durchgehende Erhöhung auf, so dass die Form der Deckfläche 133 insgesamt komplementär zur Form der zum Innenraum 205 hin gewandten Innenseite des Halterahmens 20 im Bereich der oberen horizontalen Seitenwand 202 sowie des oberen Befestigungsabschnitts 220 ausgebildet ist.

In einem vorderen, in der Nähe der Frontplatte 110 angeordneten Bereich erstrecken sich parallel zueinander zwei Federarme 137 von der Bodenwand 134 senkrecht nach unten hin. Die elastisch ausgebildeten Federarme 137 weisen jeweils im Bereich ihrer Enden auf der Vorderseite einen sich nach vorne hin erstreckenden Untergreifhaken 1371 auf. Die Untergreifhaken 1371 bilden auf ihrer Oberseite jeweils eine senkrecht nach oben hin gewandte Anschlagfläche und auf ihrer Unterseite eine nach vorne zur Frontplatte 110 hin ansteigende Schrägfläche.

Zwischen den beiden Federarmen 137 erstreckt sich zudem eine Hintergreifstruktur 138 senkrecht von der Bodenwand 134 nach unten hin. Wie die beiden Federarme 137, ist auch die Hintergreifstruktur 138 in einem vorderen Bereich des Gehäuses 130 in der Nähe der Frontplatte 110 angeordnet. In Gegensatz zu den Federarmen 137 ist die Hintergreifstruktur 138 aber nicht flexibel, sondern starr ausgebildet.

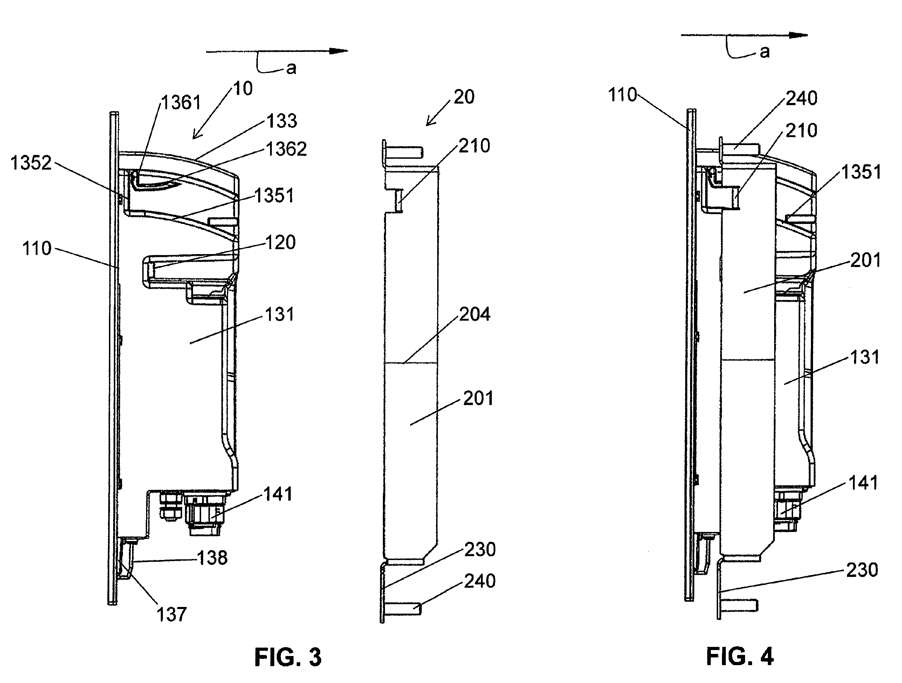

Aus den Figuren 3 bis 6f ist das Zusammenwirken der verschiedenen Elemente des Einsatzmoduls 10 und des Halterrahmens 20 beim Einbau der Sprechanlage in einer Wand ersichtlich. Die Figur 3 zeigt die Ausgansposition vor dem Einsetzen des Einsatzmoduls 10 in den Halterrahmens 20. Der Halterrahmen 20 wurde vorgängig mittels Schrauben, welche durch die Schraubhülsen 240 hindurchgeführt werden, in einer in den Abbildungen nicht dargestellten Wand befestigt. Als alternative Befestigungsmöglichkeit können die Schraubhülsen 240 jeweils auch ein Aussengewinde aufweisen, um den Halterrahmen 20 mit Hilfe von Schraubenmuttern, welche von hinten auf die Schraubhülsen 240 aufgeschraubt werden, in einem Wandbereich zu befestigen. Zur Fixierung des Einsatzmoduls 10 im Halterrahmen 20 wird das Einsatzmodul 10 nun entlang des Pfeiles a mit dem Gehäuse 130 voran in den Innenraum 205 des Halterrahmens 20 eingeführt.

Wie es in der Figur 4 gezeigt ist, bildet die Lasche 210 des Halterahmens 20 beim Einführen des Einsatzmoduls 10 in den Halterrahmen 20 einen oberen Anschlag für den gewölbten Abschnitt 1351 der Führungsstruktur 135. Einen weiteren Anschlag nach oben hin bilden die Unterseiten des oberen Befestigungsabschnitts 220 sowie der oberen Seitenwand 202 des Halterrahmens 20, welche eine Führung für die Deckwand 133 des Gehäuses 130 bilden. Das Einsatzmodul 10 kann dadurch geführt in den Halterahmen 20 eingesetzt werden.

Bei einem weiteren Einführen des Einsatzmoduls 10 in den Halterrahmen 20 bildet zudem die Lasche 210 einen unteren Anschlag für den horizontalen Abschnitt 1362 der L-förmigen Struktur 136, wodurch das weitere Einführen des Einsatzmoduls 10 in den Halterrahmen 20 sowohl nach oben als auch nach unten hin geführt ist. Aufgrund der nur geringfügig kleineren Breite des Gehäuses 130 im Vergleich zur Breite des Innenraums 205 des Halterrahmens 20 erfolgt das Einführen des Einsatzmoduls 10 in den Halterrahmen 20 auch zu den Seiten hin geführt.

Aufgrund der von vorne nach hinten abgerundeten Form der Deckwand 133 wird das Einsatzmodul 10 bevorzugt nicht, wie in den Figuren 3 und 4 gezeigt, gerade in den Halterahmen 20 eingeführt, sondern in einer relativ zum Halterahmen 20 schrägen Lage mit dem unteren Bereich des Gehäuses 130 voran. Dadurch werden zuerst die an den Anschlusssteckern 141 angeschlossenen elektrischen Leitungen und anschliessend die Anschlussstecker 141 selbst in den Halterahmen 20 eingeführt, bevor weitere Bereiche des Einsatzmoduls 10 in den Innenraum 205 des Halterahmens 20 eindringen. Sobald die Frontplatte 110 am unteren Befestigungsabschnitt 230 anschlägt, kann das Einsatzmodul 10 mit einer anschliessenden Kippbewegung vollständig auch mit seinem oberen Bereich in den Halterahmen 20 eingeführt werden. Die an den Anschlusssteckern 141 angeschlossenen Leitungen werden dabei kontrolliert nach hinten und nach unten gedrückt, so dass ein Einklemmen dieser Leitungen zwischen Einsatzmodul 10 und Halterahmen 20 vermieden wird.

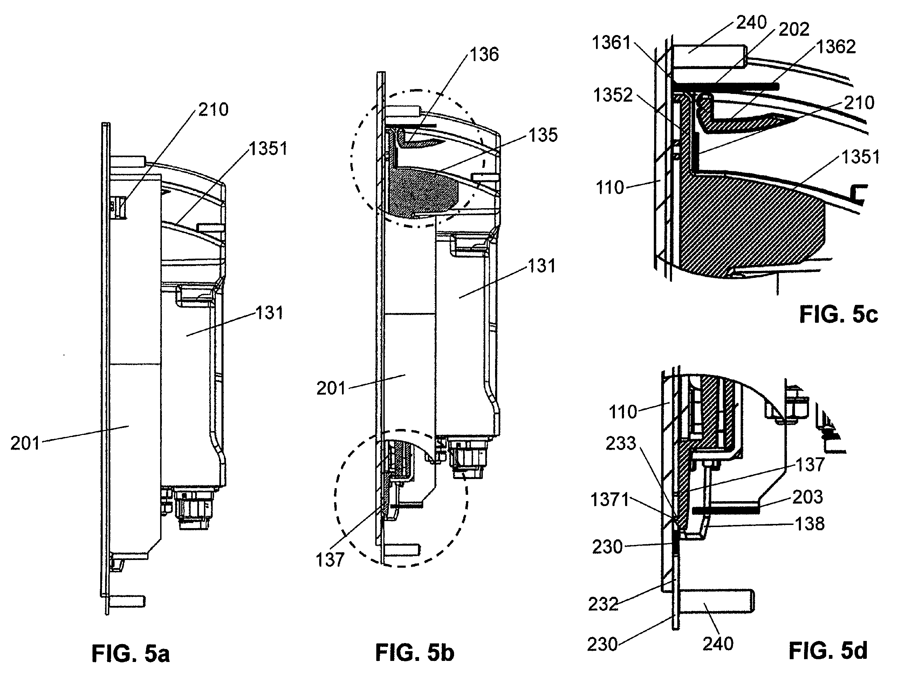

Das Einsatzmodul 10 wird, wie es in den Figuren 5a bis 5d gezeigt ist, in den Halterrahmen 20 eingeführt, bis der vertikale Abschnitt 1352 der Führungsstruktur 135 an der Lasche 210 und/oder die Frontplatte 110 mit ihrer Rückseite an der Vorderseite der Befestigungsabschnitte 220 und 230 anschlägt. Die Federarme 137 sowie die Hintergreifstruktur 138 ragen in dieser Position geringfügig in die Öffnung 231 des unteren Befestigungsabschnitts 230 hinein (siehe Fig. 5d).

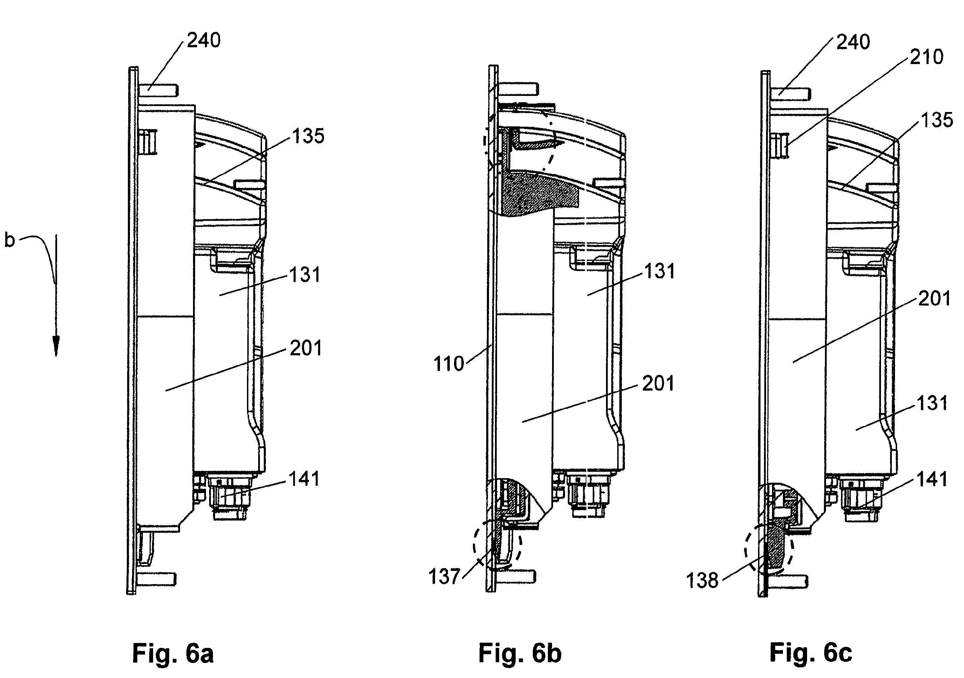

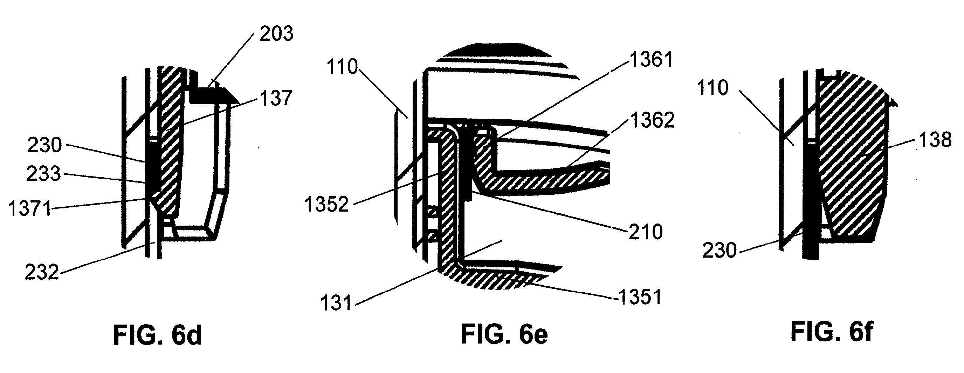

Um das Einsatzmodul 10 nun im Halterrahmen 20 zu fixieren, wird das Einsatzmodul 10 entlang einer hier als Einschnapprichtung bezeichneten Richtung entlang des Pfeiles b (siehe Figur 6a) relativ zum Halterrahmen 20 nach unten hin verschoben. Dabei wird die Lasche 210, wie es insbesondere in der Figur 6e gezeigt ist, in den Bereich zwischen den vertikalen Abschnitten 1352 und 1361 der Führungsstruktur 135 bzw. der L-förmigen Struktur 136 eingeführt. In dieser Position wird aufgrund der L-förmigen Struktur 136 eine zerstörungsfeie Bewegung des Einsatzmoduls 10 relativ zum Halterrahmen 20 in eine im Wesentlichen senkrecht zur Wandoberfläche stehende Richtung verunmöglicht.

Beim vertikalen Verschieben des Einsatzmoduls 10 relativ zum Halterrahmen 20 in Richtung des Pfeiles b werden die unteren Schrägflächen der Federarme 137 von der Oberseite des unteren Befestigungsabschnitts 230 des Halterrahmens 20 geringfügig nach hinten gedrückt, so dass die Federarme 137 rückseitig zum unteren Befestigungsabschnitt 230 nach unten gleiten bis sie aufgrund ihrer Elastizität an der Unterkante 233 einschnappen. Die nach oben hin gewandte Fläche der Untergreifhaken 1371 bildet dann, wie es in der Figur 6d gezeigt ist, einen Anschlag an der Unterkante 233 des Halterrahmens 20, wodurch ein Zurückschieben des Einsatzmoduls 10 relativ zum Halterrahmen 20 entgegen der Einschnapprichtung verhindert wird.

Beim Verschieben des Einsatzmoduls 10 entlang Pfeiles b wird die Hintergreifstruktur 138 von oben her in die Öffnung 231 des Halterrahmens 20 hinein bewegt. Dabei kommt die Hintergreifstruktur 138, wie es in der Figur 6f gezeigt ist, unmittelbar anliegend zur Rückseite des unteren Befestigungsabschnitts 230 des Halterrahmens 20 zu liegen. Der untere Befestigungsabschnitt 230, welcher im Endmontagezustand somit zwischen der Frontplatte 110 und der Hintergreifstruktur 138 angeordnet ist, verhindert dadurch eine Bewegung des unteren Bereiches des Einsatzmoduls 10 senkrecht zur Wandoberfläche.

Dadurch, dass die in den Schraubhülsen 240 gehaltenen Befestigungsschrauben sowie die Federarme 137 hinter der Frontplatte 110 und damit von aussen her unzugänglich angeordnet sind, ist nach erfolgter Montage der Sprechanlage ein Entfernen des Einsatzmoduls 10 aus dem Halterrahmen 20 bzw. ein Entfernen des Halterrahmens 20 von der Wand mittels herkömmlichen Werkzeugen verunmöglicht. Ein autorisiertes Entfernen des Einsatzmoduls 10 vom Halterrahmen 20 ist jedoch mittels eines eigens dafür vorgesehenen Spezialwerkzeuges möglich. Das Spezialwerkzeug kann zum Beispiel die Form einer abgeflachten Gabel aufweisen, welche mit ihren Zinken voran von unten her zwischen der Frontplatte 110 und der Wandoberfläche zu den Federarmen 137 hin vorgeschoben werden kann, um die Federarme 137 gegenüber von der Unterkante 233 abzuheben und somit eine Vertikalverschiebung des Einsatzmoduls 10 entgegen der Pfeilrichtung b relativ zum Halterrahmen 20 zu ermöglichen.

Selbstverständlich ist die hier beschriebene Erfindung nicht auf die erwähnte Ausführungsform beschränkt, und eine Vielzahl von Abwandlungen ist möglich. So ist beispielsweise das Vorhandensein der Hintergreifstruktur 138 nicht zwingend, da deren Funktion beispielsweise auch von den Federarmen 137 übernommen werden könnte. Es würde zudem grundsätzlich auch ausreichen, wenn am Einsatzmodul nur eine einzelne erste Hintergreifstruktur sowie ein einzelnes Schnappelement vorhanden wären, welche mit einem entsprechenden einzelnen ersten Rückhalteelement bzw. einer einzelnen Einschnappstruktur des Halterahmens zusammenwirken. Die Rollen des Schnappelements und der Einschnappstruktur können selbstverständlich auch vertauscht sein, d.h. das Schnappelement kann z.B. in Form eines Federarms am Halterahmen ausgebildet sein, und die Einschnappstruktur am Einsatzmodul. Eine Vielzahl weiterer Abwandlungen ist denkbar.

**BEZUGSZEICHENLISTE**

| | | | |
|---|---|---|---|
| 10 | Einsatzmodul | 141 | Anschlussstecker |
| | | | |
| 110 | Frontplatte | 20 | Halterahmen |
| 111 | Druckknopf | | |
| 112 | Lautsprecherperforation | 201 | Vertikale Seitenwand |
| 113 | Mikrophonschlitz | 202 | Obere horizontale Seitenwand |
| 114 | Statusleuchte | | |
| | | 203 | Untere horizontale |
| 120 | Schraube | | Seitenwand |
| | | 204 | Schweissnaht |
| 130 | Gehäuse | 205 | Innenraum |
| 131 | Seitenwand | | |
| 132 | Rückwand | 210 | Lasche |
| 133 | Deckwand | 220 | Oberer Befestigungsabschnitt |
| 134 | Bodenwand | 221 | Aussparung |
| | | 230 | Unterer |
| 135 | Führungsstruktur | | Befestigungsabschnitt |
| 1351 | Gewölbter Abschnitt | 231 | Öffnung |
| 1352 | Vertikaler Abschnitt | 232 | Aussparung |
| 136 | L-förmige Struktur | 233 | Unterkante |
| 1361 | Vertikaler Abschnitt | | |
| 1362 | Horizontaler Abschnitt | 240 | Schraubhülse |
| 137 | Federarm | 241 | Schraubloch |
| 1371 | Untergreifhaken | | |
| 138 | Hintergreifstruktur | a | Pfeil |
| | | b | Pfeil |
| 140 | Elektronikkomponenten | | |

## Patentansprüche

1. Bauteil zum Einbau in einer Wand, aufweisend
ein Einsatzmodul (10) mit einem Gehäuse (130), einer am Gehäuse (130) angebrachten Frontplatte (110) und einer ersten Hintergreifstruktur (1361); sowie
einen in der Wand befestigbaren Halterahmen (20) mit einem ersten Rückhalteelement (210) sowie mit einer Seitenwand (201, 202, 203), welche einen Innenraum (205) zur Aufnahme des Gehäuses (130) des Einsatzmoduls (10) begrenzt;
wobei die erste Hintergreifstruktur (1361) und das erste Rückhalteelement (210) derart ausgebildet und angeordnet sind, dass das erste Rückhalteelement (210) zum Halten der ersten Hintergreifstruktur (1361) dient, so dass in einem eingebauten Zustand des Bauteils die erste Hintergreifstruktur (1361) und das erste Rückhalteelement (210) gemeinsam eine Bewegung des Einsatzmoduls (10) relativ zum Halterahmen (20) in eine im Wesentlichen senkrecht zur Wandoberfläche stehende Richtung verhindern,
**dadurch gekennzeichnet, dass**
das Bauteil zudem zumindest ein Schnappelement (137) aufweist, welches als ein hakenförmiger Federarm (137) am Einsatzmodul (10) oder am
Halterahmen (20) ausgebildet ist, welcher zum Einschnappen an einer dazu korrespondierenden Einschnappstruktur (233) des Halterahmens (20) bzw. des Einsatzmoduls (10) einen Untergreifhaken (1371) aufweist, so dass im eingebauten Zustand des Bauteils das Schnappelement (137) und die Einschnappstruktur (233) gemeinsam eine Bewegung des Einsatzmoduls (10) relativ zum Halterahmen (20) in eine sich im Wesentlichen parallel zur Wandoberfläche erstreckende Richtung verhindern, und dass es sich beim ersten Rückhalteelement (210) um eine Lasche handelt, welche sich senkrecht von der Seitenwand (201, 202, 203) in den Innenraum (205) hinein erstreckt.

2. Bauteil nach Anspruch 1, wobei das zumindest eine Schnappelement (137) am Einsatzmodul (10) und die Einschnappstruktur (233) am Halterahmen (20) ausgebildet ist.

3. Bauteil nach Anspruch 1, wobei das zumindest eine Schnappelement (137) derart am Einsatzmodul (10) bzw. am Halterahmen (20) angeordnet ist, dass es im eingebauten Zustand des Bauteils zwischen der Wandoberfläche und der Frontplatte (110) des Einsatzmoduls (10) angeordnet ist.

4. Bauteil nach einem der vorhergehenden Ansprüche, wobei der Halterahmen (20) insgesamt im Wesentlichen aus einem oder mehreren Blechen hergestellt ist.

5. Bauteil nach einem der vorhergehenden Ansprüche, wobei am Gehäuse (130) des Einsatzmoduls (10) zumindest eine erste Führungsstruktur (1351) vorhanden ist, welche beim Einsetzen des Einsatzmoduls (10) in den Halterahmen eine erste Führungsbahn für das Einsatzmodul (10) entlang des ersten Rückhalteelements (210) bildet.

6. Bauteil nach Anspruch 5, wobei am Gehäuse (130) des Einsatzmoduls (10) zudem eine zweite Führungsstruktur (1362) vorhanden ist, welche beim Einsetzen des Einsatzmoduls (10) in den Halterahmen (10) eine zweite Führungsbahn für das Einsatzmodul (10) entlang des ersten Rückhalteelements (210) bildet, so dass das erste Rückhalteelement (210) beim Einsetzen des Einsatzmoduls (10) in den Halterahmen (20) zwischen der ersten und der zweiten Führungsbahn geführt ist.

7. Bauteil nach Anspruch 6, wobei die erste Hintergreifstruktur (1361) und die zweite Führungsstruktur (1362) gemeinsam eine L-förmige Struktur (136) bilden.

8. Bauteil nach Anspruch 6 oder 7, wobei sich die erste und die zweite Führungsstruktur (1351, 1361) in Richtung zur Frontplatte (110) hin einander annähern.

9. Bauteil nach Anspruch 1, wobei der Halterahmen (20) eine den Innenraum (205) begrenzende Seitenwand (203) sowie einen Befestigungsabschnitt (230) aufweist, welcher sich im Wesentlichen senkrecht derart von der Seitenwand (203) aus erstreckt, dass er sich im eingebauten Zustand des Bauteils im Wesentlichen parallel zur Wandoberfläche erstreckt, wobei das Schnappelement bzw. die Einschnappstruktur (233) an diesem Befestigungsabschnitt (230) ausgebildet ist, und wobei am Befestigungsabschnitt (230) bevorzugt zumindest ein Befestigungselement (240) vorgesehen ist, welches zum Befestigen des Halterahmens (20) in der Wand dient.

10. Bauteil nach einem der vorhergehenden Ansprüche, wobei das Einsatzmodul (10) eine zweite Hintergreifstruktur (138) und der Halterahmen (20) ein zweites Rückhalteelement (230) aufweist, und wobei die zweite Hintergreifstruktur (138) und das zweite Rückhalteelement (230) derart ausgebildet und angeordnet sind, dass das zweite Rückhalteelement (230) zum Halten der zweiten Hintergreifstruktur (138) dient, so dass im eingebauten Zustand des Bauteils das zweite Rückhalteelement (230) und die zweite Hintergreifstruktur (138) gemeinsam eine Bewegung des Einsatzmoduls (10) relativ zum Halterahmen (20) in eine im Wesentlichen senkrecht zur Wandoberfläche stehende Richtung verhindern.

11. Bauteil nach einem der vorhergehenden Ansprüche, wobei das Gehäuse (130) des Einsatzmoduls (10) eine Aussenfläche (133) aufweist, welche eine derart abgerundete Form hat, dass das Einsatzmodul (10) aufgrund dieser abgerundeten Form in einer schrägen Lage in den Halterahmen (20) eingesetzt und mit einer anschliessenden Kippbewegung vollständig in den Halterahmen (20) eingeführt werden kann.

12. Bauteil nach einem der vorhergehenden Ansprüche, wobei das Gehäuse (130) des Einsatzmoduls (10) eine Aussenfläche (133) mit einer uneben ausgebildeten Oberflächenstruktur aufweist, und wobei der Halterahmen (20) eine zum Innenraum (205) hin gerichtete Innenseite mit einer komplementär zu dieser Oberflächenstruktur strukturierten Führungsstruktur aufweist, so dass beim Einsetzen des Einsatzmoduls (10) in den Halterahmen (20) die Oberflächenstruktur von der Führungsstruktur des Halterahmens (20) geführt wird.

13. Bauteil nach einem der vorhergehenden Ansprüche, wobei es sich beim Bauteil um eine Sprechanlage handelt.

## Claims

1. A component for installation in a wall, comprising
an insert module (10) with a housing (130), a front plate (110) being attached to the housing (130) and a first engaging behind structure (1361); and
a holding frame (20) being attachable in the wall with a first retention element (210) and with a side wall (201, 202, 203), which delimits an interior space (205) for receiving the housing (130) of the insert module (10);
wherein the first engaging behind structure (1361) and the first retention element (210) are configured and arranged such, that the first retention element (210) serves the purpose of holding the first engaging behind structure (1361), such that in an installed state of the component the first engaging behind structure (1361) and the first retention element (210) jointly prevent a movement of the insert module (10) relative to the holding frame (20) in a direction being substantially perpendicular to the wall surface,
**characterized in that**
the component further comprises at least one snap element (137), which is configured as a hook-shaped spring arm (137) at the insert module (10) or at the holding frame (20), that comprises a catch hook (1371) for snapping at a corresponding snapping structure (233) of the holding frame (20) or of the insert module (10), respectively, such that in the installed state of the component the snap element (137) and the snapping structure (233) jointly prevent a movement of the insert module (10) relative to the holding frame (20) in a direction extending substantially parallel to the wall surface, and that the first retention element (210) is a tap, which extends perpendicularly from the side wall (201, 202, 203) into the interior space (205).

2. The component according to claim 1, wherein the at least one snap element (137) is formed on the insert module (10) and the snapping structure (233) is formed on the holding frame (20).

3. The component according to claim 1, wherein the at least one snap element (137) is arranged on the insert module (10) or on the holding frame (20), respectively, such, that in the installed state of the component it is arranged between the wall surface and the front plate (110) of the insert module (10).

4. The component according to any one of the preceding claims, wherein the holding frame (20) as a whole is substantially made of one or several sheets.

5. The component according to any one of the preceding claims, wherein at least one first guiding structure (1351) is provided on the housing (130) of the insert module (10), which, when inserting the insert module (10) into the holding frame, forms a first guide track for the insert module (10) along the first retention element (210).

6. The component according to claim 5, wherein a second guiding structure (1362) is additionally provided on the housing (130) of the insert module (10), which, when inserting the insert module (10) into the holding frame (10), forms a second guide track for the insert module (10) along the first retention element (210), such that the first retention element (210), when inserting the insert module (10) into the holding frame (20), is guided between the first and the second guide track.

7. The component according to claim 6, wherein the first engaging behind structure (1361) and the second guiding structure (1362) jointly form an L-shaped structure (136).

8. The component according to claim 6 or 7, wherein the first and second guiding structure (1351, 1361) approach each other in the direction towards the front plate (110).

9. The component according to claim 1, wherein the holding frame (20) comprises a side wall (203) delimiting the interior space (205) and a fastening section (230), which extends substantially perpendicular from the side wall (203) such, that in the installed state of the component it extends substantially parallel to the wall surface, wherein the snap element or the snapping structure (233), respectively, are formed on said fastening section (230), and wherein preferably at least one fastening element (240) is provided on the fastening section (230), which serves the purpose of fastening the holding frame (20) in the wall.

10. The component according to any one of the preceding claims, wherein the insert module (10) comprises a second engaging behind structure (138) and the holding frame (20) comprises a second retention element (230), and wherein the second engaging behind structure (138) and the second retention element (230) are configured and arranged such, that the second retention element (230) serves the purposes of holding the second engaging behind structure (138), such that in the installed state of the component the second retention element (230) and the second engaging behind structure (138) jointly prevent a movement of the insert module (10) relative to the holding frame (20) in a direction being substantially perpendicular to the wall surface.

11. The component according to any one of the preceding claims, wherein the housing (130) of the insert module (10) comprises an outer surface (133), which has a rounded shape such, that the insert module (10) due to this rounded shape can be inserted in an oblique position into the holding frame (20) and with a subsequent tilting movement can be completely introduced into the holding frame (20).

12. The component according to any one of the preceding claims, wherein the housing (130) of the insert module (10) comprises an outer surface (133) with an unevenly designed surface structure, and wherein the holding frame (20) comprises an inner side facing the interior space (205) with a guiding structure being structured complementary to said surface structure, such that, when inserting the insert module (10) into the holding frame (20), the surface structure is guided by the guiding structure of the holding frame (20).

13. The component according to any one of the preceding claims, wherein the component is an intercommunication system.

## Revendications

1. Élément de construction pour insertion dans une paroi, comprenant un module d'insertion (10) disposant d'un logement (130), d'un panneau frontal (110) disposé sur le logement (130) et une première structure venant en prise par derrière (1361) ; ainsi que
un cadre de maintien (20) fixable dans la paroi ayant un premier élément de retenue (210) ainsi qu'une paroi latérale (201, 202, 203) laquelle limite un espace intérieur (205) pour la réception du logement (130) du module d'insertion (10) ;
où la première structure venant en prise par derrière (1361) et le premier élément de retenue (210) sont formés et disposés de sorte que le premier élément de retenue (210) sert à maintenir la première structure venant en prise par derrière (1361), de sorte que, dans un état incorporé de l'élément de construction, la première structure venant en prise par derrière (1361) et le premier élément de retenu (210) empêchent conjointement un mouvement du module d'insertion (10) par rapport au cadre de maintien (20) dans une direction sensiblement verticale par rapport à la surface de paroi,
**caractérisé en ce que**,
l'élément de construction en outre présente au moins un élément d'encliquetage (137), lequel est formé en bras à ressort en forme de crochet (137) au niveau du module d'insertion ou au niveau du cadre de maintien (20), lequel dispose d'un crochet venant en prise par le bas (1371) pour encliqueter au niveau d'une structure d'encliquetage y correspondante du cadre de maintien (20) respectivement du module d'insertion (10), de sorte que dans l'état incorporé de l'élément de construction l'élément d'encliquetage (137) et la structure d'encliquetage (233) empêchent conjointement un mouvement du module d'insertion (10) par rapport au cadre de maintien (20) dans une direction s'étendant sensiblement de manière parallèle à la surface de paroi, et **en ce que** dans le cas de l'élément de retenue (210) il s'agit d'une languette, laquelle s'étend verticalement depuis la paroi latérale (201, 202, 203) vers l'intérieur de l'espace intérieur (205).

2. Élément de construction selon la revendication 1, où l'au moins un élément d'encliquetage (137) est formé au niveau du module d'insertion (10) et la structure d'encliquetage (233) est formée au niveau du cadre de maintien (20).

3. Élément de construction selon la revendication 1, où l'au moins un élément d'encliquetage (137) est disposé au niveau du module d'insertion (10) respectivement du cadre de maintien (20) de sorte que dans un état incorporé de l'élément de construction, celui-ci est disposé entre la surface de paroi et le panneau frontal (110) du module d'insertion (10).

4. Élément de construction selon une des revendications précédentes, où le cadre de maintien (20) est fait sensiblement à partir d'une ou plusieurs tôles dans son ensemble.

5. Élément de construction selon une des revendications précédentes, où au moins une première structure de guidage (1351) est prévue au niveau du boîtier (130) du module d'insertion (10), laquelle forme une première trajectoire de guidage pour le module d'insertion (10) le long du premier élément de retenue (210) lors de l'insertion du module d'insertion (10) dans le cadre de maintien.

6. Élément de construction selon la revendication 5, où en outre une deuxième structure de guidage (1362) est prévue au niveau du boîtier (130) du module d'insertion (10), laquelle forme une deuxième trajectoire de guidage pour l'élément d'insertion (10) le long du premier élément de retenue (210) lors de l'insertion du module d'insertion (10) dans le cadre de maintien (10), de sorte que le premier élément de retenue (210) est guidé entre la première et deuxième trajectoire de guidage lors de l'insertion du module d'insertion (10) dans le cadre de maintien (20).

7. Élément de construction selon la revendication 6, où la première structure venant en prise par derrière (1361) et la deuxième structure de guidage (1362) forment conjointement une structure en forme de L (136).

8. Élément de construction selon la revendication 6 ou 7, où la première et la deuxième structure de guidage (1351, 1361) se rapprochent l'une à l'autre en direction du panneau frontal (110).

9. Élément de construction selon la revendication 1, où le cadre de maintien (20) présente une paroi latérale (203) limitant l'espace intérieur (205) ainsi que une section de fixation (230), laquelle s'étend sensiblement verticalement depuis la paroi latérale (203) de sorte que celle-ci s'étend sensiblement de manière parallèle à la surface de paroi dans un état incorporé de l'élément de construction, où l'élément d'encliquetage respectivement la structure d'encliquetage (233) est formé au niveau de cette section de fixation (230), et où au moins un élément de fixation (240) est préférablement prévu au niveau de la section de fixation (230), lequel sert à fixer le cadre de maintien (20) dans la paroi.

10. Élément de construction selon une des revendications précédentes, où le module d'insertion (10) présente une deuxième structure venant en prise par derrière (138) et le cadre de maintien (20) présente un deuxième élément de retenue (230), et où la deuxième structure venant en prise par derrière (138) et le deuxième élément de retenue (230) sont formés et agencés de sorte que le deuxième élément de retenue (230) sert à maintenir la deuxième structure venant en prise par derrière (138) si bien que, dans un état incorporé de l'élément de construction, le deuxième élément de retenue (230) et la deuxième structure venant en prise par derrière (138) empêchent conjointement un mouvement du module d'insertion (10) par rapport au cadre de maintien (20) dans une direction sensiblement verticale par rapport à la surface de paroi.

11. Élément de construction selon une des revendications précédentes, où le boîtier (130) du module d'insertion (10) présente une surface extérieure (133), laquelle a une forme arrondie de telle manière que le module d'insertion (10) peut être inséré dans une position inclinée dans le cadre de maintien (20) en raison de cette forme arrondie et peut être inséré entièrement dans le cadre de maintien (20) au moyen d'un mouvement de basculement subséquent.

12. Élément de construction selon une des revendications précédentes, où le boîtier (130) du module d'insertion (10) présente une surface extérieure (133) avec une structure de surface formée de manière dénivelée, et où le cadre de maintien (20) présente un côté intérieur dirigé vers l'espace intérieur (205) ayant une structure de guidage structurée de manière complémentaire à cette structure de surface, de sorte que lors de l'insertion du module d'insertion (10) dans le cadre de maintien (20) la structure de surface est guidée par la structure de guidage du cadre de maintien (20).

13. Élément de construction selon une des revendications précédentes, où dans le cas de l'élément de construction il s'agit d'un interphone.
